# EUROPEAN PATENT SPECIFICATION

(11) **EP 2 477 365 B1**
(45) Date of publication and mention of the grant of the patent: **11.03.2015**
(21) Application number: 11360007.6
(22) Date of filing: 13.01.2011
(51) Int. Cl.: H04L 12/801

(54) **Transmission of encoded data packets**
Übertragung von codierten Datenpaketen
Transmission de paquets de données codés

(43) Date of publication of application: 18.07.2012
(73) Proprietor: ALCATEL LUCENT, 92100 Boulogne-Billancourt (FR)
(72) Inventor: Wang, Yalou, Swindon, SN5 5UG (GB)
(74) Representative: Sarup, David Alexander

(56) References cited:
- WO-A1-2010/080916
- US-A1- 2009 316 904

## Description

### FIELD OF THE INVENTION

The present invention relates to a base station operable to transmit encoded data packets, a method and a computer program product.

### BACKGROUND

It is known to generate encoded data packets for transmission from a base station to user equipment. For example, it is known to receive data packets from a core network at the base station which are to be subjected to encoding in accordance with a packet data convergence protocol. A packet data convergence protocol unit encodes the data packets. These encoded data packets are then provided to a radio link controller for onward transmission to user equipment over an air interface. To account for variation in the data rate of the air interface between the base station and the user equipment, a buffer is provided within the radio link controller which holds the encoded data packets until the radio link controller is informed that a transmission scheduling opportunity over the air interface exists.

WO 2010/080916 A1 discloses techniques for unbundling packets received during wireless communications. In particular, packet data units (PDUs) are combined into a service data unit (SDU) for transmission. Once PDCP layer provides data packets to one RLC layer. Another PDCP layer receives data packets from another RLC layer.

Whilst this approach enables encoded data packets to be transmitted to the user equipment, difficulties can arise.

Accordingly, it is desired to provide an improved technique for the transmission of encoded data packets.

### SUMMARY

According to a first aspect, there is provided a base station as claimed in claim 1.

The first aspect recognises that existing arrangements require multiple buffers. In particular, packet data convergence protocol (PDCP) processing by PDCP logic occurs whenever data packets are provided (i.e. whenever there is traffic on the downlink data stream) and the packet data convergence protocol processing protocol data units (PDCP PDUs) are output immediately to the radio link controller. The radio link controller (RLC) then has to buffer the PDCP PDUs in an RLC buffer so that whenever an indication is received from a scheduler that the air interface is available, the data units may be transmitted. Also, the PDCP logic needs to maintain a buffer which contains a copy of the unprocessed data unit provided to the radio link controller in order to support lossless handover.

In addition, in order to prevent buffer overflow (which can happen when a radio link is slow or stopped), RLC-PDCP flow control is needed to stop PDCP processing when the RLC buffer is full. Furthermore, a third buffer is needed to store any new user data received whilst PDCP processing is stopped in order to support lossless handover. It will be appreciated, therefore, that this architecture is complex and there is a degree of duplication across the buffers which leads to an unnecessary use of precious resources within a base station.

Furthermore, because of the complexity of RLC-PDCP flow control, it is hard to optimize the flow control parameters and the dimensioning of the three buffers to prevent either buffer overflow or under run, whilst maintaining the highest possible throughput under various radio conditions. In addition, layer 2 quality of service timer based discard is difficult to implement correctly, since the PDCP and RLC processing operates independently with no knowledge of how long each buffer holds each packet.

Whilst it may be possible to combine the PDCP and RLC processing together (that is, only when the scheduler requests data does the PDCP processing start which then passes on the encoded data units to the RLC and onto the scheduler), a problem with this approach is that the processing latency may be high. If this latency becomes too high, then the encoded data units may arrive at the scheduler too late for the available slot.

Accordingly, a base station operable to transmit encoded data packets to user equipment may be provided. The base station may comprise packet data convergence protocol logic operable to generate packet data convergence protocol encoded data packets from received data packets and radio link controller logic operable to generate radio link controller encoded data packets for transmission to user equipment from the packet data convergence protocol encoded data packets. The packet data convergence protocol logic may comprise processing logic operable to perform at least partial packet data convergence protocol processing on the received data packets. That is to say, some degree of pre-processing may be performed on the received data packets as they become available.

The packet data convergence protocol logic may also comprise a packet data convergence protocol (PDCP) buffer operable to store the data packets subjected to the at least partial packet data convergence protocol processing. Accordingly, rather than simply storing the unprocessed data packets in the PDCP buffer, the processed data packets may instead be stored in the PDCP buffer. The processed data packets may be kept within the PDCP buffer until a request is received from the radio link controller logic. Hence, rather than passing the processed data packets directly to the radio link controller, which would then need to buffer those processed data packets in a separate buffer until availability exists to transmit those data packets over the air interface, the processed data packets are instead retained within the PDCP buffer. This avoids the need to provide an input buffer for the radio link controller. It will be appreciated that this can significantly reduce the amount of buffer space that may be required. Also, by pre-processing the data packets, the latency of any request from the radio link controller for data packets is significantly reduced, which reduces the likelihood of an available scheduling slot being missed.

Through this approach, it can be seen that it is possible to perform dynamic (on-the-fly) PDCP processing so that data is available upon request, whilst combining the RLC and PDCP buffer together, so eliminating buffer duplication and waste. In order to do this, the data packets are pre-processed whenever available, but not then passed on to the radio link controller; instead, they are stored in a combined common buffer.

In one embodiment, the packet data convergence protocol logic is operable to provide the data packets subjected to the at least partial packet data convergence protocol processing to an unbuffered input of the radio link controller logic for immediate generation of the radio link controller encoded data packets. Accordingly, the input of the radio link controller logic may be buffer-free and instead the data packets provided by the PDCP logic may be available for immediate processing by the radio link controller logic, which reduces latency and avoids unnecessary buffer use.

In one embodiment, the base station comprises an input buffer operable to store each of the received data packets provided to the packet data convergence protocol logic until an indication is received confirming a data packet has been received by the user equipment. Accordingly, data packets provided to the PDCP logic may be stored temporarily in an input buffer in their unprocessed state. These data packets may then be deleted from this input buffer when it has been confirmed that a data packet has been received by the user equipment. It will be appreciated that this helps to ensure that lossless handover can occur, if required.

In one embodiment, the processing logic is operable to perform packet data convergence protocol processing on headers of the received data packets and the packet data convergence protocol buffer is operable to store the headers subjected to the packet data convergence protocol processing. Accordingly, rather than performing complete PDCP processing on the data packets, a sub-set of the PDCP processing tasks may be performed. In particular, typically, those relatively more time-intensive PDCP processing tasks may be performed in order to pre-process the data packets, leaving any relatively less time-intensive tasks until the data packets are requested by the radio link controller. Typically, PDCP processing on headers may be performed since this is relatively time-intensive and the processed headers stored in the PDCP buffer. Accordingly, those PDCP processing tasks except ciphering may be performed which includes the generation of the PDCP PDU header, robust header compression (RoHC) processing of the user data header so as to generate a compressed header, and the generation of PDCP control PDUs. All these headers, plus the control PDUs, may be stored in the PDCP buffer. Typically, the PDCP buffer will also provide links to the original data packets which are still stored in the input buffer. Accordingly, it can be seen that the time-intensive operations are pre-performed in order to reduce the latency of any request for data packets, and by only storing the headers in the PDCP buffer without the data payload, the amount of storage used in the PDCP buffer is considerably reduced.

In one embodiment, the packet data convergence protocol logic comprises: packet data convergence protocol ciphering logic operable, in response to the request from the radio link controller logic for a data packet, to retrieve from the packet data convergence protocol buffer the header associated with that data packet together with a payload of that data packet from the input buffer and to perform packet data convergence protocol ciphering on at least a portion of the header and the payload to generate the packet data convergence protocol encoded data packet. Accordingly, ciphering logic is provided which, when a request for a data packet is received, may retrieve the PDCP processed header associated with that data packet from the PDCP buffer as well as the payload of the data packet from the input buffer and completes the PDCP processing by ciphering the appropriate parts of the header and payload to generate the PDCP encoded data packet. Because the process of ciphering is typically very fast, this can be done with minimal latency on-the-fly in response to a request.

In one embodiment, the processing logic is operable to perform packet data convergence protocol processing on the received data packets and the packet data convergence protocol buffer is operable to store the received data packets subjected to the packet data convergence protocol processing as the packet data convergence protocol encoded data packets. Accordingly, complete PDCP processing may be performed on the data packets and the PDCP processed data packets then stored in the PDCP buffer. Hence, the complete set of PDCP processing tasks may be performed and the completely processed data packets stored in the PDCP buffer. Although this increases the amount of storage used by the PDCP buffer, the latency following a request for a data packet is reduced to a minimum as a result.

In one embodiment, the packet data convergence protocol logic is operable to delete from said packet data convergence protocol buffer a data packet subjected to the at least partial packet data convergence protocol processing provided to said radio logic controller. Hence, when it has been confirmed that a data packet has been correctly received, the corresponding data packet may then be deleted from the PDCP buffer.

In one embodiment, the packet data convergence protocol logic operable, in response to the indication received from the radio link controller logic that a data packet has been received by user equipment, to delete a corresponding data packet from the input buffer. Accordingly, when confirmation is received that a data packet has been correctly received by user equipment, then the corresponding data packet stored in the input buffer may also be deleted.

In one embodiment, the indication received from the radio link controller logic that the data packet has been received by user equipment is inferred from the request for a data packet. Accordingly, rather than requiring an explicit message indicating that a particular data packet has been correctly received by user equipment, requests for subsequent data packets following the provision of an earlier data packet may be utilised to indicate that the previous data packets have been correctly received by the user equipment.

In one embodiment, the packet data convergence protocol logic is operable to prevent the processing logic from to performing the at least partial packet data convergence protocol processing when an occupancy level of the packet data convergence protocol buffer exceeds a predetermined threshold. Accordingly, should the occupancy level of the PDCP buffer become too high, then PDCP processing of received data packets may be suspended until the occupancy reduces in order to reduce the risk of buffer overflow. In these circumstances, received data packets may continue to be stored by the input buffer until that also overflows.

According to a second aspect, there is provided a method as claimed in claim 11.

In one embodiment, the method comprises the step of: providing the data packets subjected to the at least partial packet data convergence protocol processing for generating the radio link controller encoded data packets without buffering.

In one embodiment, the method comprises the step of: storing each of the received data packets provided to the packet data convergence protocol logic in an input buffer until an indication is received confirming a data packet has been received by the user equipment.

In one embodiment, the step of generating packet data convergence protocol encoded data packets comprises: generating packet data convergence protocol encoded data packets by performing packet data convergence protocol processing on headers of the received data packets and the step of storing comprises: storing the headers subjected to the packet data convergence protocol processing.

In one embodiment, the method comprises the steps of: in response to the request for a data packet, retrieving from the packet data convergence protocol buffer the header associated with that data packet together with a payload of that data packet from the input buffer; and performing packet data convergence protocol ciphering on at least a portion of the header and the payload to generate the packet data convergence protocol encoded data packet.

In one embodiment, the step of generating packet data convergence protocol encoded data packets comprises: generating packet data convergence protocol encoded data packets by performing packet data convergence protocol processing on the received data packets and the step of storing comprises: storing the received data packets subjected to the packet data convergence protocol processing as the packet data convergence protocol encoded data packets.

In one embodiment, the method comprises the step of: deleting from said packet data convergence protocol buffer a data packet subjected to the at least partial packet data convergence protocol processing from the packet data convergence protocol buffer provided to said radio logic controller.

In one embodiment, the method comprises the step of: in response to the indication received that a data packet has been received by user equipment, deleting a corresponding data packet from the input buffer.

In one embodiment, the method comprises the step of: inferring that the data packet has been received by user equipment from the request for a data packet.

In one embodiment, the method comprises the step of: preventing the at least partial packet data convergence protocol processing when an occupancy level of the packet data convergence protocol buffer exceeds a predetermined threshold.

According to a third aspect, there is provided a computer program product operable, when executed on a computer, to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates components of a base station supporting full PDCP pre-processing according to one embodiment; and
Figure 2 illustrates components of a base station supporting partial PDCP pre-processing according to one embodiment.

### DESCRIPTION OF THE EMBODIMENTS

### OVERVIEW

Before discussing the embodiments in any detail, a brief overview of embodiments will now be provided. As mentioned above, a problem with existing PDCP and RLC processing architectures is that the amount of buffer resources required is high, due to the near duplication of data in different buffers. Also, because of the existence of multiple buffers, there is a problem of ensuring adequate flow control between the RLC and PDCP processing components, which needs reliable timing in order to maintain a desired occupancy within each of those buffers even though the PDCP and RLC processing occurs independently.

Accordingly, a single combined buffer is provided for use by the PDCP and RLC processing components. The combined buffer stores pre-processed data packets which have been subjected to at least some amount of PDCP processing which is performed as soon as the data packets are made available to the PDCP logic. However, rather than providing the PDCP process data packets directly to the RLC logic, these pre-processed data packets are initially stored in the PDCP buffer. This avoids the need to have a further buffer dedicated to the RLC logic. Also, because the data packets stored in the PDCP buffer have been pre-processed, the latency between the RLC logic being requested to supply data packets for transmission over the air interface and being able to supply such data packets is reduced so that a slot allocated by a scheduler may be utilised. By having a single buffer used by both the PDCP logic and the RLC logic reduces the buffer resources required and avoids the need for RLC-PDCP flow control.

The PDCP pre-processing may take at least two different forms described herein as "full pre-processing" and "partial pre-processing". PDCP processing includes PDCP sequence number maintenance and PDU header generation, ROHC processing on the IP and upper layer headers of user data and ciphering to the data part of the PDCP PDUs. In full pre-processing, all of the above PDCP processes are applied. In partial pre-processing, all the above PDCP processing tasks are applied, except that ciphering is omitted and only done when the scheduler requests data.

### FULL PDCP PROCESSING

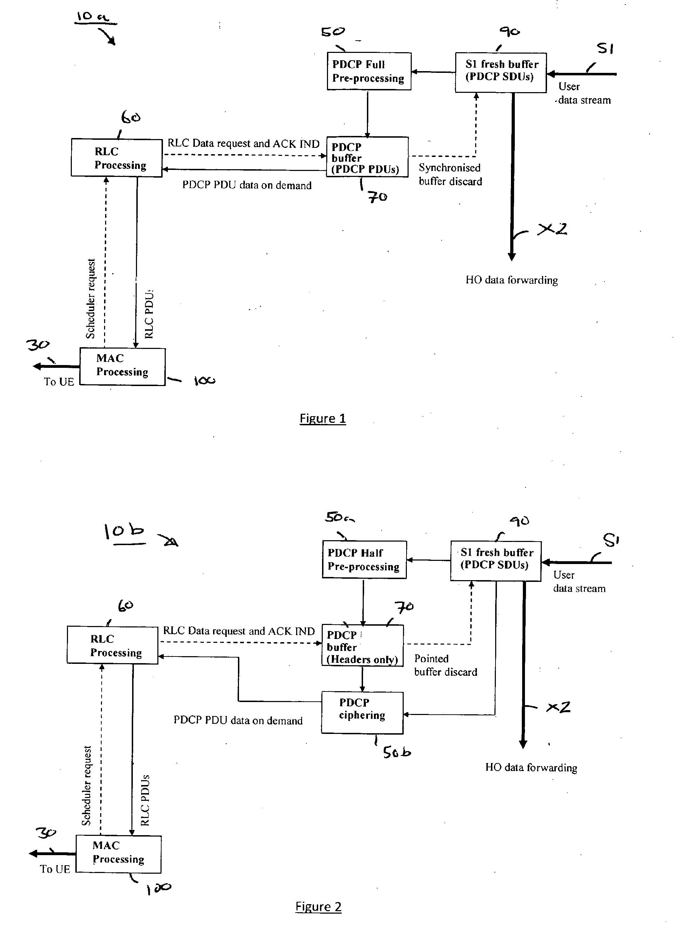

Figure 1 illustrates components of a base station supporting full PDCP pre-processing according to one embodiment.

The base station, generally 10a, is coupled via a communications link S1 with the core network (not shown). The base station 10a communicates with user equipment (not shown) via an air interface 30. The base station 10a also communicates with other base stations when performing handover via a communications link X2.

The base station 10a comprises a number of different layers such as, for example, a L1 layer, a user plane layer, and a control plane layer. The user plane layer is coupled with the core network via the S1 link and receives downlink (DL) data packets via an S1 buffer 90 at packet data convergence protocol (PDCP) processing logic 50 for encoding into an encrypted PDCP frame, which is transmitted as PDCP data packets (PDUs) to a radio link controller (RLC) 60 via a data path in the user plane. The radio link controller 60 then provides the PDCP PDUs over the air interface 30 via the L1 (MAC) layer to the user equipment.

In this full pre-processing scheme, received data units (PDCP SDUs) are stored in the S1 buffer 90. The PDCP processing logic 50 performs full PDCP processing on the received data packets and stores them (PDCP PDUs including the control PDUs) in the PDCP buffer 70. The PDCP buffer 70 acts as a combined buffer for both the RLC 60 and the PDCP processing logic 70. The received user data within the S1 buffer 90 is maintained to be available for lossless handover, if required.

The full PDCP processing includes PDCP sequence number maintenance and PDU header generation, RoHC processing on the IP and upper layer headers of the user data and ciphering to the data part of the PDCP PDU. This PDCP pre-processed data is stored in the PDCP buffer 70.

Whenever the scheduler of the MAC processing logic 100 has a data request, the data request is passed to the PDCP buffer 70 (either relayed or directly) and the PDCP buffer 70 provides the PDCP pre-processed data packets to the RLC 60. These PDCP pre-processed data packets are then deleted from the PDCP buffer 70. The RLC 60 then applies RLC processing to those data packets and passes the RLC processed data packets (RLC PDUs) to the MAC processing logic 100 for transmission to the user equipment over the air interface 30. Because the data packets stored in the PDCP buffer 70 have been subjected to full PDCP processing, no further PDCP processing is required. Also, because the speed at which the RLC 60 performs its processing is high, the latency between the scheduler of the MAC processing logic 100 requesting data and receiving the requested data is sufficiently low to enable the requested data to be transmitted over the available slot on the air interface 30.

Since the RLC 60 has its own ACK status indicator (RLC ARQ operation) for every RLC data request, the RLC ACK status can be piggy-backed (that is to say combined) together with a request for a further data packet to delete the user equipment acknowledged PDCP SDUs from the S1 buffer 90 using an index, sequence number or other link identifier utilised by a memory management unit (not shown).. This helps to keep the occupancy of this S1 buffer 90 to a minimum, thereby reducing the risk of overflow. Also, this helps to ensure that, should handover be required, only those data packets which have not been acknowledged by the user equipment need be forwarded.

If the air interface 30 is slow or stuck, resulting in reduced MAC data requests, the PDCP buffer 70 may overflow. Accordingly, the PDCP processing logic 50 will be instructed to stop pre-processing and data packets will continue to be stored in the S1 buffer 90. Pre-processing by the PDCP processing logic 50 will resume when the occupancy of the PDCP buffer 70 reduces below a predetermined threshold. Should the S1 buffer 90 become full, then new user data will be discarded. Accordingly, no RLC-PDCP flow control is required.

This arrangement, which uses full PDCP pre-processing, is suitable for implementations where PDCP processing is slow (which would typically occur when RoHC and ciphering is software-based). However, many implementations use hardware-based ciphering so this processing will be almost real-time, with minimal hardware delay. Accordingly, partial PDCP pre-processing can be used which saves even more buffer space, as will be discussed in more detail below.

### PARTIAL PDCP PROCESSING

Figure 2 illustrates components of a base station supporting partial PDCP pre-processing according to one embodiment. The arrangement of this embodiment is similar to that described above, with the exception that the PDCP processing logic 50 is split into two components; partial PDCP processing logic 50a and PDCP ciphering logic 50b. In this partial pre-processing arrangement, the partial PDCP processing logic 50a performs all PDCP processing except ciphering.

Accordingly, the PDCP pre-processing relates to the received data packets header only, not the data payload part. This partial PDCP pre-processing performed by the logic 50a includes the generation of the PDCP PDU header (sequence number processing), RoHC processing of the user data header to generate the compressed header, and the generation of the PDCP control PDUs. All of these headers, plus the PDCP control PDUs, are stored in the PDCP buffer 70. Pointers within the PDCP buffer 70 link to the received data units that are still stored in the S 1 buffer 90.

Hence, those PDCP processing tasks which may take longer to perform than would enable the maximum acceptable latency requirements of a request from the scheduler within the MAC processing logic 100 to be achieved are performed and the pre-processed data is stored in the PDCP buffer 70. Those PDCP processing tasks which are quick (such as ciphering, which is typically implemented in hardware) are performed when the data packets are requested. This provides the advantages of performing any relatively slow PDCP processing to generate the pre-processed data packets to reduce the latency of any requests for data packets and reduces the occupancy of the PDCP buffer 70 since only headers need be stored therein.

Whenever the scheduler within the MAC processing logic 100 requests data, this request is passed to the partial PDCP processing logic 50a by the RLC logic 60 (either relayed or directly). The pre-processed data packets are read out from the PDCP buffer 70 (this provides the header information) and the corresponding data part is provided from the S 1 buffer 90.

These two parts of the requested data packet are provided to the PDCP ciphering logic 50b which performs PDCP ciphering and passes the fully PDCP processed data packet to the RLC 60 which performs RLC processing on-the-fly and passes the processed data packet to the MAC processing logic 100 for transmission over the air interface 30 to the user equipment. The PDCP pre-processed data packet is then deleted from the PDCP buffer 70.

Since the RLC 60 has its own ACK status indicator (RLC ARQ operation) for every RLC data request, the RLC ACK status can be piggy-backed (that is to say combined) together to delete the user equipment acknowledged PDCP SDUs from the S 1 buffer 90. This helps to keep the buffer occupation to a minimum, since those data packets which have been confirmed as being received by the user equipment are deleted from the S 1 buffer 90 using an index, sequence number or other link identifier utilised by a memory management unit (not shown), thereby reducing the risk of overflow. Also, this helps to ensure that, should handover be required, only those data packets which have not been acknowledged by the user equipment need be forwarded.

It will be appreciated that the PDCP buffer 70 is unlikely to overflow as it stores only headers. Accordingly, this is an even simpler arrangement than the full PDCP processing arrangement described above as the S1 buffer 90 can just operate as a first-in-first-out (FIFO) buffer with continuous processing. If it overflows, the received data packets will be discarded and no PDCP processing will be performed on them. Accordingly, it can be seen that in this case even PDCP processing control is not required.

It will be appreciated that this partial PDCP pre-processing scheme is suitable for arrangements where ciphering is fast, which is almost always the case as ciphering is generally hardware-based. Furthermore, since RoHC processing is more relevant to voice-over IP (VOIP), this may be turned off on non-VOIP bearers, thereby saving even more space in the PDCP buffer 70.

In both the full and partial pre-processing arrangements, since there is just one combined RLC-PDCP buffer it is also possible to implement layer 2 QoS timer-based discard, since there is no delay in the RLC layer. The timer needs to run on the PDCP buffer 70 only.

Hence, it can be seen that full or partial PDCP pre-processing with the combined buffer eliminates buffer duplication across the RLC and PDCP and removes the need for RLC-PDCP flow control. However, this arrangement still maintains the real-time data availability when the MAC requests data. Also, it is possible to implement accurate layer 2 timer-based discard due to the common buffer. It will be appreciated that this provides significant advantages over existing distributed architectures. Saving base station buffer space by halving the buffers removing complex flow control algorithms improves user playing performance.

Although the above arrangement has been described in relation to a base station, it will be appreciated that this arrangement may apply to other network nodes such as user equipment and radio network controllers.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A base station (10a; 10b) operable to transmit encoded data packets to user equipment, said base station comprising:
packet data convergence protocol logic operable to generate packet data convergence protocol encoded data packets from received data packets; and
radio link controller logic (50) operable to generate radio link controller encoded data packets for transmission to user equipment from said packet data convergence protocol encoded data packets,
**characterized by** that
said packet data convergence protocol logic comprises:
processing logic (50; 50a) operable to perform at least partial packet data convergence protocol processing on said received data packets; and
a packet data convergence protocol buffer (70) operable to store data packets subjected to said at least partial packet data convergence protocol processing to be provided to said radio link controller logic in response to a request from said radio link controller logic.

2. The base station of claim 1, wherein said packet data convergence protocol logic is operable to provide said data packets subjected to said at least partial packet data convergence protocol processing to an unbuffered input of said radio link controller logic for immediate generation of said radio link controller encoded data packets.

3. The base station of claim 1 or 2, comprising:
an input buffer (90) operable to store each of said received data packets provided to said packet data convergence protocol logic until an indication is received confirming a data packet has been received by said user equipment.

4. The base station of any preceding claim, wherein said processing logic is operable to perform packet data convergence protocol processing on headers of said received data packets and said packet data convergence protocol buffer is operable to store said headers subjected to said packet data convergence protocol processing.

5. The base station of claims 3 or 4, wherein said packet data convergence protocol logic comprises:
packet data convergence protocol ciphering logic (50b) operable, in response to said request from said radio link controller logic for a data packet, to retrieve from said packet data convergence protocol buffer said header associated with that data packet together with a payload of that data packet from said input buffer and to perform packet data convergence protocol ciphering on at least a portion of said header and said payload to generate said packet data convergence protocol encoded data packet.

6. The base station of any one of claims 1 to 3, wherein said processing logic is operable to perform packet data convergence protocol processing on said received data packets and said packet data convergence protocol buffer is operable to store said received data packets subjected to said packet data convergence protocol processing as said packet data convergence protocol encoded data packets.

7. The base station of claim 6, wherein said packet data convergence protocol logic is operable to delete from said packet data convergence protocol buffer a data packet subjected to said at least partial packet data convergence protocol processing provided to said radio logic controller.

8. The base station of any one of claims 3 to 7, wherein said packet data convergence protocol logic operable, in response to said indication received from said radio link controller logic that a data packet has been received by user equipment, to delete a corresponding data packet from said input buffer.

9. The base station of any one of claims 3 to 8, wherein said indication received from said radio link controller logic that said data packet has been received by user equipment is inferred from said request for a data packet.

10. The base station of any preceding claim, wherein said packet data convergence protocol logic is operable to prevent said processing logic from to performing said at least partial packet data convergence protocol processing when an occupancy level of said packet data convergence protocol buffer exceeds a predetermined threshold.

11. A method of transmitting encoded data packets, said method comprising the steps of:
generating packet data convergence protocol encoded data packets from received data packets by performing at least partial packet data convergence protocol processing on said received data packets;
storing data packets subjected to said at least partial packet data convergence protocol processing in a packet data convergence protocol buffer (70); and
providing said packets subjected to said at least partial packet data convergence protocol processing to radio link controller logic (60) in response to a request from said radio link controller logic to generate radio link controller encoded data packets for transmission from said packet data convergence protocol encoded data packets.

12. The method of claim 11, wherein said step of generating packet data convergence protocol encoded data packets comprises:
generating packet data convergence protocol encoded data packets by performing packet data convergence protocol processing on headers of said received data packets and said step of storing comprises:
storing said headers subjected to said packet data convergence protocol processing.

13. The method of claim 12, comprising the steps of:
in response to said request for a data packet, retrieving from said packet data convergence protocol buffer said header associated with that data packet together with a payload of that data packet from an input buffer; and
performing packet data convergence protocol ciphering on at least a portion of said header and said payload to generate said packet data convergence protocol encoded data packet.

14. The method of claim 11, wherein said step of generating packet data convergence protocol encoded data packets comprises:
generating packet data convergence protocol encoded data packets by performing packet data convergence protocol processing on said received data packets and said step of storing comprises:
storing said received data packets subjected to said packet data convergence protocol processing as said packet data convergence protocol encoded data packets.

15. A computer program product operable, when executed on a computer, to perform the method steps of any one of claims 11 to 14.

## Patentansprüche

1. Basisstation (10a; 10b), betreibbar für die Übertragung von codierten Datenpaketen an ein Benutzergerät, wobei die besagte Basisstation umfasst:
Paketdatenkonvergenzprotokoll-Logik, betreibbar für die Erzeugung von gemäß dem Paketdatenkonvergenzprotokoll codierten Paketdaten aus empfangenen Datenpaketen; und
Funkverbindungs-Controller-Logik (50), betreibbar für die Erzeugung von gemäß dem Funkverbindungs-Controller codierten Datenpaketen aus den besagten gemäß dem Paketdatenkonvergenzprotokoll codierten Datenpaketen zur Übertragung an ein Benutzergerät,
**dadurch gekennzeichnet, dass** die besagte Paketdatenkonvergenzprotokoll-Logik umfasst:
Verarbeitungslogik (50; 50a), betreibbar für die Durchführung von zumindest teilweiser Paketdatenkonvergenzprotokoll-Verarbeitung auf den besagten empfangenen Datenpaketen; und
Einen Paketdatenkonvergenzprotokoll-Pufferspeicher (70), betreibbar für die Speicherung von Datenpaketen, welche der besagten zumindest teilweisen Verarbeitung von Paketdatenkonvergenzprotokoll unterzogen werden und in Reaktion auf eine Anforderung von der besagten Funkverbindungs-Controller-Logik an die besagte Funkverbindungs-Controller-Logik zu übertragen sind.

2. Basisstation nach Anspruch 1, wobei die besagte Paketdatenkonvergenzprotokoll-Logik betreibbar ist, um die besagten Datenpakete, welche der besagten zumindest teilweisen Verarbeitung von Paketdatenkonvergenzprotokoll unterzogen werden, an einen ungepufferten Eingang der besagten Funkverbindungs-Controller-Logik zur sofortigen Erzeugung der besagten gemäß dem Funkverbindungs-Controller codierten Datenpakete bereitzustellen.

3. Basisstation nach Anspruch 1 oder 2, umfassend:
Einen Eingangspufferspeicher (90), betreibbar für die Speicherung der besagten empfangenen, an die besagte Paketdatenkonvergenzprotokoll-Logik bereitgestellten Datenpakete, bis eine Angabe empfangen wird, welche bestätigt, dass ein Datenpaket an dem besagten Benutzergerät empfangen wurde.

4. Basisstation nach einem beliebigen der vorstehenden Ansprüche, wobei die besagte Verarbeitungslogik betreibbar ist, um die Verarbeitung des Paketdatenkonvergenzprotokolls auf Headern der besagten empfangenen Datenpakete durchzuführen, und wobei der besagten Paketdatenkonvergenz-Pufferspeicher betreibbar ist, um die besagten Header, welche der besagten Paketdatenkonvergenzprotokoll-Verarbeitung unterzogen werden zu speichern.

5. Basisstation nach den Ansprüchen 3 oder 4,wobei die besagte Paketdatenkonvergenzprotokoll-Logik umfasst:
Paketdatenkonvergenzprotokoll-Verschlüsselungslogik (50b), betreibbar, um in Reaktion auf die besagte Anforderung von der besagten Funkverbindungs-Controller-Logik für ein Datenpaket den besagten mit diesem Datenpaket assoziierten Header aus dem besagten Paketdatenkonvergenz-Pufferspeicher zusammen mit Nutzdaten dieses Datenpakets aus dem besagten Eingangspufferspeicher abzurufen und die Paketdatenkonvergenzprotokoll-Verschlüsselung auf zumindest einem Teil des besagten Headers und der besagten Nutzdaten durchzuführen, um das besagte mit dem besagten Paketdatenkonvergenzprotokoll codierten Datenpaket zu erzeugen.

6. Basisstation nach einem beliebigen der Ansprüche 1 bis 3, wobei die besagte Verarbeitungslogik betreibbar ist, um die Paketdatenkonvergenzprotokoll-Verarbeitung auf den empfangenen Datenpaketen durchzuführen, und wobei der besagte Paketdatenkonvergenzprotokoll-Pufferspeicher betreibbar ist, um die besagten empfangenen Datenpakete, welche der besagten Paketdatenkonvergenzprotokoll-Verarbeitung unterzogen werden, als die besagten mit dem Paketdatenkonvergenzprotokoll codierten Datenpakete zu speichern.

7. Basisstation nach Anspruch 6, wobei die besagte Paketdatenkonvergenzprotokoll-Logik betreibbar ist, um ein Datenpaket, welches der besagten, an den besagten Funklogik-Controller bereitgestellten zumindest teilweisen Paketdatenkonvergenzprotokoll-Verarbeitung unterzogen wird, aus dem besagten Paketdatenkonvergenzprotokoll-Pufferspeicher zu löschen.

8. Basisstation nach einem beliebigen der Ansprüche 3 bis 7, wobei die besagte Paketdatenkonvergenzprotokoll-Logik betreibbar ist, um in Reaktion auf die besagte von der besagten Funkverbindungs-Controller-Logik empfangene Angabe, dass ein Datenpaket an dem Benutzergerät empfangen wurde, ein entsprechendes Datenpaket aus dem besagten Eingangspufferspeicher zu löschen.

9. Basisstation nach einem beliebigen der Ansprüche 3 bis 8, wobei die besagte von der besagten Funkverbindungs-Controller-Logik empfangene Angabe, dass ein Datenpaket an dem Benutzergerät empfangen wurde, aus der besagten Anforderung für ein Datenpaket abgeleitet wird.

10. Basisstation nach einem beliebigen der vorstehenden Ansprüche, wobei die besagte Paketdatenkonvergenzprotokoll-Logik betreibbar ist, um ein Durchführen der besagten zumindest teilweisen Paketdatenkonvergenzprotokoll-Verarbeitung durch die besagte Verarbeitungslogik zu verhindern, wenn ein Füllstand des besagten Paketdatenkonvergenzprotokoll-Pufferspeichers einen vorbestimmten Grenzwert überschreitet.

11. Verfahren zur Übertragung von codierten Datenpaketen, wobei das besagte Verfahren die folgenden Schritte umfasst:
Erzeugen von gemäß dem Paketdatenkonvergenzprotokoll codierten Datenpaketen aus empfangenen Datenpaketen durch Durchführen einer zumindest teilweisen Paketdatenkonvergenzprotokoll-Verarbeitung auf den besagten empfangenen Datenpaketen;
Speichern von Datenpaketen, welche der besagten zumindest teilweisen Paketdatenkonvergenzprotokoll-Verarbeitung unterzogen werden, in einem Paketdatenkonvergenzprotokoll-Pufferspeicher (70); und
Bereitstellen der besagten Pakete, welche der besagten zumindest teilweisen Paketdatenkonvergenzprotokoll-Verarbeitung unterzogen werden, an eine Funkverbindungs-Controller-Logik (60) in Reaktion auf eine Anforderung von der besagten Funkverbindungs-Controller-Logik, um mit dem Funkverbindungs-Controller codierte Datenpakete für die Übertragung aus den besagten mit dem Paketdatenkonvergenzprotokoll codierten Datenpaketen zu erzeugen.

12. Verfahren nach Anspruch 11, wobei der besagte Schritt des Erzeugens von mit dem Paketdatenkonvergenzprotokoll codierten Datenpaketen umfasst:
Erzeugen von mit dem Paketdatenkonvergenzprotokoll codierten Datenpaketen durch Durchführen einer Paketdatenkonvergenzprotokoll-Verarbeitung auf Headern der besagten empfangenen Datenpakete, und wobei der besagte Schritt des Speicherns umfasst:
Speichern der besagten Header, welche der besagten Paketdatenkonvergenzprotokoll-Verarbeitung unterzogen werden.

13. Verfahren nach Anspruch 12, die folgenden Schritte umfassend:
In Reaktion auf die besagte Anforderung für ein Datenpaket, Abrufen des besagten mit diesem Datenpaket assoziierten Headers zusammen mit den Nutzdaten dieses Datenpakets aus einem Eingangspuffer aus dem besagten Paketdatenkonvergenzprotokoll-Pufferspeicher; und
Durchführen der Paketdatenkonvergenzprotokoll-Verschlüsselung auf zumindest einem Teil des besagten Headers und der besagten Nutzdaten, um das besagte mit dem Paketdatenkonvergenzprotokoll codierte Datenpaket zu erzeugen.

14. Verfahren nach Anspruch 11, wobei der besagte Schritt des Erzeugens von mit dem Paketdatenkonvergenzprotokoll codierten Datenpaketen umfasst:
Erzeugen von mit dem Paketdatenkonvergenzprotokoll codierten Datenpaketen durch Durchführen einer Paketdatenkonvergenzprotokoll-Verarbeitung auf den besagten empfangenen Datenpaketen, und wobei der besagte Schritt des Speicherns umfasst:
Speichern der besagten Datenpakete, welche der besagten Paketdatenkonvergenzprotokoll-Verarbeitung unterzogen werden, als die besagten mit dem Paketdatenkonvergenzprotokoll codierten Datenpakete.

15. Computerprogramm-Produkt, betreibbar für die Durchführung der Verfahrensschritte gemäß einem beliebigen der Ansprüche 11 bis 14, wenn es auf einem Computer ausgeführt wird.

## Revendications

1. Station de base (10a ; 10b) permettant de transmettre des paquets de données codés à l'équipement utilisateur, ladite station de base comprenant :
une logique de protocole de convergence de données par paquets permettant de générer des paquets de données codés de protocole de convergence de données par paquets à partir de paquets de données reçus ; et
une logique de contrôleur de liaison radio (50) permettant de générer des paquets de données codés de contrôleur de liaison radio à transmettre à l'équipement utilisateur à partir desdits paquets de données codés de protocole de convergence de données par paquets,
**caractérisée en ce que** ladite logique de protocole de convergence de données par paquets comprend :
une logique de traitement (50 ; 50a) permettant d'exécuter un traitement de protocole de convergence de données par paquets au moins partiel sur lesdits paquets de données reçus ; et
un tampon de protocole de convergence de données par paquets (70) permettant de stocker des paquets de données soumis audit traitement de protocole de convergence de données par paquets au moins partiel à fournir à ladite logique de contrôleur de liaison radio en réponse à une demande de ladite logique de contrôleur de liaison radio.

2. Station de base selon la revendication 1, dans laquelle ladite logique de protocole de convergence de données par paquets permet de fournir lesdits paquets de données soumis audit traitement de protocole de convergence de données par paquets au moins partiel à une entrée non munie d'un tampon de ladite logique de contrôleur de liaison radio pour la génération immédiate desdits paquets de données codés de contrôleur de liaison radio.

3. Station de base selon la revendication 1 ou 2, comprenant :
un tampon d'entrée (90) permettant de stocker chacun desdits paquets de données reçus fournis à ladite logique de protocole de convergence de données par paquets jusqu'à ce qu'une indication soit reçue confirmant qu'un paquet de données a été reçu par ledit équipement utilisateur.

4. Station de base selon l'une quelconque des revendications précédentes, dans laquelle ladite logique de traitement permet d'effectuer un traitement de protocole de convergence de données par paquets sur des en-têtes desdits paquets de données reçus et ledit tampon de protocole de convergence de données par paquets permet de stocker lesdits en-têtes soumis audit traitement de protocole de convergence de données par paquets.

5. Station de base la revendication 3 ou 4, dans laquelle ladite logique de protocole de convergence de données par paquets comprend :
une logique de chiffrement de protocole de convergence de données par paquets (50b) permettant, en réponse à ladite demande de ladite logique de contrôleur de liaison radio pour un paquet de données, de récupérer à partir dudit tampon de protocole de convergence de données par paquets ledit en-tête associé à ce paquet de données avec une charge utile de ce paquet de données à partir dudit tampon d'entrée et d'effectuer un chiffrement de protocole de convergence de données par paquets sur au moins une partie dudit en-tête et de ladite charge utile pour générer ledit paquet de données codées de protocole de convergence de données par paquets.

6. Station de base selon l'une quelconque des revendications 1 à 3, dans laquelle ladite logique de traitement permet d'effectuer un traitement de protocole de convergence de données par paquets sur lesdits paquets de données reçus et ledit tampon de protocole de convergence de données par paquets permet de stocker lesdits paquets de données reçus soumis audit traitement de protocole de convergence de données par paquets comme lesdits paquets de données codés de protocole de convergence de données par paquets.

7. Station de base selon la revendication 6, dans laquelle ladite logique de protocole de convergence de données par paquets permet de supprimer dudit tampon de protocole de convergence de données par paquets un paquet de données soumis audit traitement de protocole de convergence de données par paquets au moins partiel fourni audit contrôleur de logique radio.

8. Station de base selon l'une quelconque des revendications 3 à 7, dans laquelle ladite logique de protocole de convergence de données par paquets permet, en réponse à ladite indication provenant de ladite logique de contrôleur de liaison radio qu'un paquet de données a été reçu par l'équipement utilisateur, de supprimer un paquet de données correspondant dudit tampon d'entrée.

9. Station de base selon l'une quelconque des revendications 3 à 8, dans laquelle ladite indication provenant de ladite logique de contrôleur de liaison radio que ledit paquet de données a été reçu par l'équipement utilisateur est déterminée à partir de ladite demande d'un paquet de données.

10. Station de base selon l'une quelconque des revendications précédentes, dans laquelle ladite logique de protocole de convergence de données par paquets permet d'empêcher ladite logique de traitement d'effectuer ledit traitement de protocole de convergence de données par paquets au moins partiel lorsqu'un niveau d'occupation dudit tampon de protocole de convergence de données par paquets dépasse un seuil prédéterminé.

11. Procédé de transmission de paquets de données codés, ledit procédé comprenant les étapes suivantes :
générer des paquets de données codés de protocole de convergence de données par paquets à partir de paquets de données reçus en effectuant un traitement de protocole de convergence de données par paquets au moins partiel sur lesdits paquets de données reçus ;
stocker des paquets de données soumis audit traitement de protocole de convergence de données par paquets au moins partiel dans un tampon de protocole de convergence de données par paquet (70) ; et
fournir lesdits paquets soumis audit traitement de protocole de convergence de données par paquets au moins partiel à la logique de contrôleur de liaison radio (60) en réponse à une demande de ladite logique de contrôleur de liaison radio pour générer des paquets de données codés de contrôleur de liaison radio à transmettre à partir desdits paquets de données codés de protocole de convergence de données par paquets.

12. Procédé selon la revendication 11, dans lequel ladite étape de génération de paquets de données codés de protocole de convergence de données par paquets comprend :
la génération de paquets de données codés de protocole de convergence de données par paquets en effectuant un traitement de protocole de convergence de données par paquets sur des en-têtes desdits paquets de données reçus et ladite étape de stockage comprend :
le stockage desdits en-têtes soumis audit traitement de protocole de convergence de données par paquets.

13. Procédé selon la revendication 12, comprenant les étapes suivantes :
en réponse à ladite demande d'un paquet de données, récupérer à partir dudit tampon de protocole de convergence de données par paquets ledit en-tête associé à ce paquet de données avec une charge utile de ce paquet de données à partir d'un tampon d'entrée ; et
effectuer un chiffrement de protocole de convergence de données par paquets sur au moins une partie dudit en-tête et de ladite charge utile pour générer ledit paquet de données codées de protocole de convergence de données par paquets.

14. Procédé selon la revendication 11, dans lequel ladite étape de génération de paquets de données codés de protocole de convergence de données par paquets comprend :
la génération de paquets de données codés de protocole de convergence de données par paquets en effectuant un traitement de protocole de convergence de données par paquets sur lesdits paquets de données reçus et ladite étape de stockage comprend :
le stockage desdits paquets de données reçus soumis audit traitement de protocole de convergence de données par paquets comme lesdits paquets de données codés de protocole de convergence de données par paquets.

15. Produit de programme informatique permettant, lorsqu'il est exécuté sur un ordinateur, d'exécuter les étapes du procédé selon l'une quelconque des revendications 11 à 14.
